# EUROPEAN PATENT APPLICATION

(11) **EP 4 279 791 A1**
(43) Date of publication of application: **22.11.2023**
(21) Application number: 23173134.0
(22) Date of filing: 12.05.2023
(51) Int. Cl.: F16M 11/10, F16M 13/02, F16M 11/18, G08B 13/196

(54) **MONITORING DEVICE**

(30) Priority: 19.05.2022 TW 111118669
(71) Applicant: Liao, Cheng-Yuan, New Taipei City 23850 (TW); Liao, Kuo Hsun, New Taipei City 23850 (TW)
(72) Inventor: Chang, Fu-Sheng, 23850 New Taipei City (TW)
(74) Representative: Gee, Steven William

(57) **Abstract**

Provided is a monitoring device, including: a fixed base (10) for fixing to a structure; a casing (20) with an accommodating space (21), an upper end of a longitudinal axis of the casing being rotatably connected to the fixed base; a first photoelectric device (30), arranged on lower end of the casing; a second photoelectric device (40) and a third photoelectric device (50), rotatably arranged respectively at a first position and a second position outside the casing; and a transmission mechanism (60), arranged in the accommodating space of the casing, and the transmission mechanism including: a first angular rotation mechanism (61), connected to the fixed base to drive the casing to rotate in a first direction relative to the fixed base; and a second angular rotation mechanism (63), connected to and drive the first, second, and third photoelectric devices to rotate synchronously along the second direction; wherein, the first direction and the second direction is mutually orthogonal.

## Description

### CROSS-REFERENCE TO RELATED APPLICATION

This application claims the priority of Taiwanese patent application No. 111118669, filed on May 19, 2022, which is incorporated herewith by reference.

### BACKGROUND OF THE INVENTION

### 1. Field of the Invention

The present invention relates generally to a monitor device suitable for industrial environments, and more particularly, to a monitor device that has a more compact overall volume than conventional products, and can drive three photoelectric devices to rotate synchronously in a first direction and/or a second direction.

### 2. The Prior Arts

With the progress of society and the development of science and technology, monitor devices have become a part of daily life, and are widely installed in various places such as traffic intersections, homes, businesses, offices and factories, to monitor the environment and prevent potential accident happened.

Since the majority of the monitors are disposed outdoors, the monitors are exposed to the sun, rain, and wind for long-term use, which inevitably causes corrosion and damage to the monitors, and the sand, dust, and dirt are also easy to accumulate in the slits or the lens, which will affect the use of the monitor. On the other hand, the high-grade industrial monitors are often used in harsh environments, and are often explosion-proof, so as to prevent the monitor from being damaged when a strong explosion occurs in the industrial environment, while protecting the images acquired by the monitor. Therefore, in high-grade industrial monitor devices, the monitor is generally placed in a protective case to prevent the monitor from being directly exposed to the sun and rain, being destroyed by personnel, or being affected by a strong explosion in the environment.

In order to monitor the surrounding environment as much as possible, most monitors have the function of rotating in the horizontal direction and vertical direction. Also, in order to obtain clear images at night or in poor light environments, some monitors are equipped with video cameras and thermal imaging cameras (collectively referred to as "photoelectric devices"). For example, in a known monitor, a camera and an infrared thermal imager are installed together in a transparent glass cover. However, when the infrared rays are projected outside the glass cover, the infrared rays will be reflected and refracted by the glass cover, which will affect the image acquisition of the camera. Therefore, to reduce this adverse effect, the glass cover of the monitor is usually made of germanium glass; however, the hardness and strength of germanium glass cannot meet the severe industrial explosion-proof standards.

To solve the aforementioned problems, the known monitor equipped with two kinds of photoelectric devices, such as a camera and an infrared thermal imaging camera, are included on opposite sides of the casing of the monitor. The transmission mechanism arranged inside the casing drives the casing to rotate in the horizontal direction, and drives the two photoelectric devices to rotate in the vertical direction, as shown in previous patent documents such as Chinese Patent No. CN 213817900 U.

In addition to the aforementioned two photoelectric devices, there is a practical need to equip the monitor with a third photoelectric device, such as a wide-angle camera, a telephoto camera, lighting, etc. However, as the third photoelectric device is driven to rotate synchronously with the first and second photoelectric devices, the overall mechanism usually become bulky and complicated.

### SUMMARY OF THE INVENTION

A primary objective of the present invention is to provide a monitor device that controls three photoelectric devices to rotate synchronously through a simple and compact transmission mechanism.

The present invention provides a monitor device, comprising: a fixed base, for fixing to a structure; a casing, with an accommodating space, an upper end of a longitudinal axis of the casing being rotatably connected to a lower end of the fixed base, a lower end of the longitudinal axis of the casing being provided with a first photoelectric device; a base, fixedly arranged in the accommodating space of the casing; a transmission shaft, pivotable and the axis being horizontally configured on the base; a second photoelectric device, fixedly arranged at one end of the transmission shaft, so that the second photoelectric device being rotatably located at a first position outside the casing; a third photoelectric device, fixedly arranged on the other end of the transmission shaft, so that the third photoelectric device being rotatably located at a second position outside the casing; a transmission mechanism, arranged in the accommodating space of the casing, and the transmission mechanism further comprising: a first angle rotation mechanism, disposed on one side of the base, the first angle rotation mechanism having a first motor, and the first motor being connected to the fixed base through a first gear mechanism to drive the casing rotatable back-and-forth in a first direction relative to the fixed base; and a second angular rotation mechanism, disposed on the base, the second angular rotation mechanism having a second motor, and the second motor being connected to the transmission shaft through a second gear mechanism, and connected to the first photoelectric device through the transmission shaft, so that the first photoelectric device being driven by the second motor, and the second photoelectric device and the third photoelectric device synchronously rotating back-and-forth in a second direction, wherein the first motor and the second motor being disposed parallel to each other above the base, and wherein the first direction and the second direction being orthogonal to each other. As such, all the mechanisms for driving the three photoelectric devices to rotate synchronously can be integrated and concentrated in the cylindrical casing, making the appearance of the whole monitor simpler than that of conventional monitors.

Preferably, the first direction is a horizontal direction, and the second direction is a vertical direction.

In a preferred embodiment, the first photoelectric device includes a first camera and a glass cover, the glass cover is arranged at the lower end of the casing, and the first camera is arranged inside the glass cover.

Preferably, the first gear mechanism comprises: a first driving gear set, connected to a drive shaft of the first motor; a first idler gear, connected to a first worm provided on the base, and the first idler gear meshing with the first driving gear set; a first driven gear, connected to a first encoder provided on the base, and the first driven gear meshing with the first driving gear set; and a first worm wheel, located on the fixed base and engaged with the first worm.

Preferably, the second gear mechanism comprises: a second driving gear set, connected to a drive shaft of the second motor; a second idler gear, connected to a second worm located on the base, and the second idler gear meshing with the second driving gear set; a second driven gear, connected to a second encoder provided on the base, and the second driven gear meshing with the second driving gear set; and a second worm wheel, fixedly located on the drive shaft and engaged with the second worm.

Preferably, the second angle rotation mechanism further comprises a driving pulley, a belt, and a driven pulley, wherein the driving pulley is fixedly arranged on the drive shaft, the driven pulley is connected to the first camera, the belt connects the driving pulley and the driven pulley, so that the transmission shaft drives the second photoelectric device and the three photoelectric devices to rotate in the second direction, and at the same time drives the first camera to rotate in the second direction through the driving pulley, the belt, and the driven pulley.

### BRIEF DESCRIPTION OF THE DRAWINGS

The present invention will be apparent to those skilled in the art by reading the following detailed description of a preferred embodiment thereof, with reference to the attached drawings, in which:
FIG. 1 is a schematic view of the assembled monitor device of the present invention;
FIG. 2 is a perspective view of the transmission mechanism of the monitor device of the present invention;
FIG. 3 is an exploded view showing the composition relationship of the components of the monitor device of the present invention;
FIG. 4 is a front view showing the structure of the monitor device of the present invention;
FIG. 5 is a schematic view showing the casing of the monitor device of the present invention rotating in the horizontal direction; and
FIG. 6 is a schematic view showing the rotation of the photoelectric device of the monitor device of the present invention in the vertical direction.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

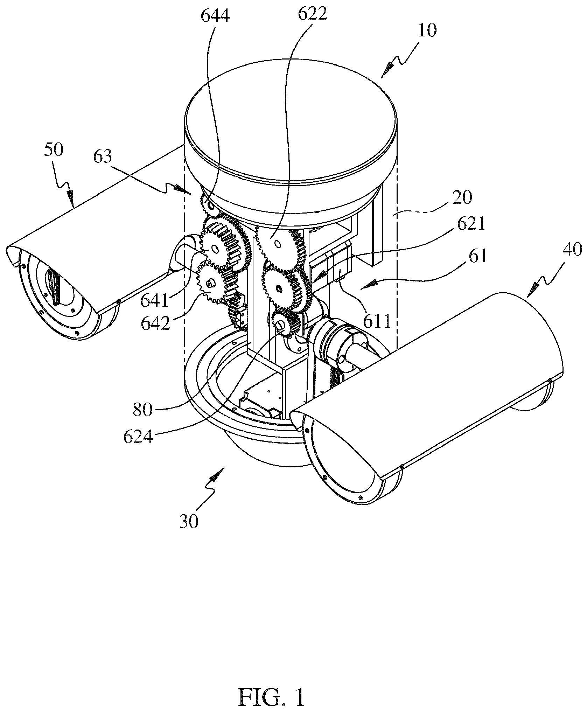

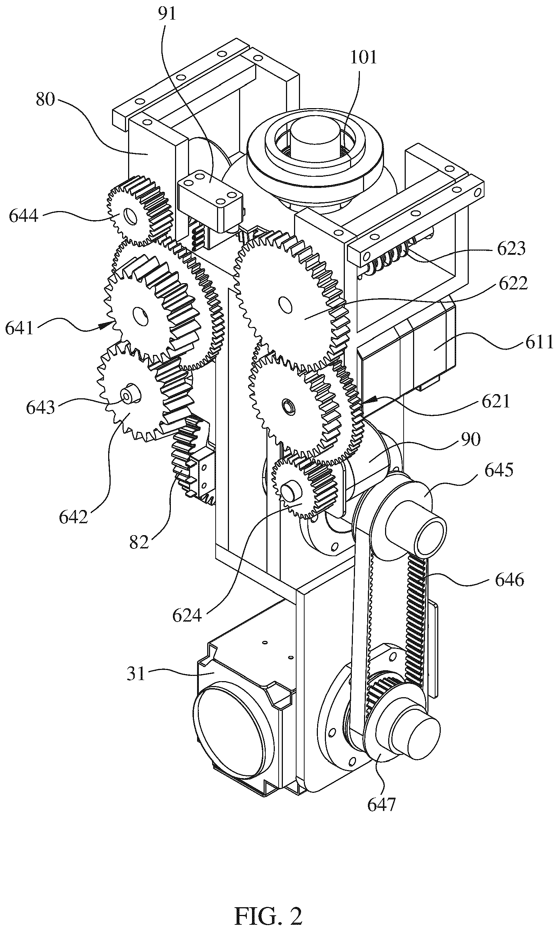

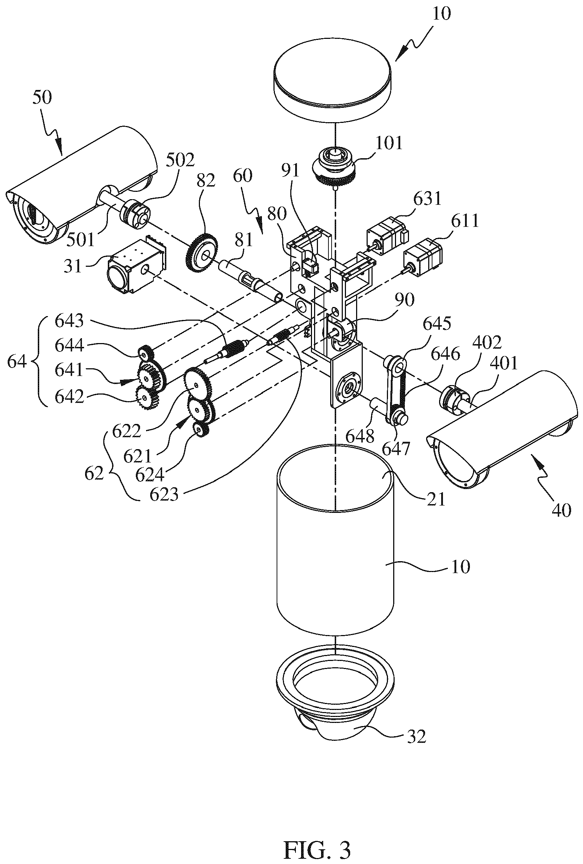

As shown in FIGS. 1-4, the monitor of the present invention includes a cylindrical casing 20, the upper end of the casing 20 is rotatably connected to a fixed base 10, and the lower end of the casing 20 is fixedly provided with a first photoelectric device 30, a second photoelectric device 40, and a third photoelectric device 50, arranged on the opposite sides of the casing 20. The fixed base 10 is to be fixed to an appropriate structure, such as, ceiling, rack, roof, pillar, etc., so that the monitor can monitor a wide range of surrounding environment.

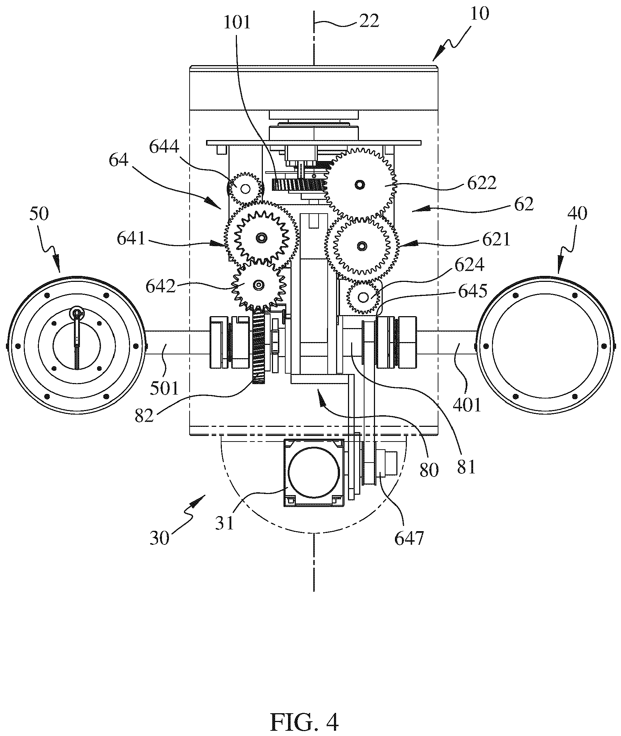

The casing 20 can also be a rectangular body or a polygonal body instead of a cylindrical body. However, in a preferred embodiment of the present invention, the casing 20 is formed into a cylindrical body based on the simplicity of appearance. Therefore, the inside of the casing 20 is a cylindrical accommodating space 21, so that there is a virtual longitudinal axis 22 in the center of the cylindrical body, as shown in FIG. 4. The upper end of the casing 20 is rotatably connected to the fixed base 10; more specifically, the shaft and the bearing (not shown) can be arranged between the casing 20 and the fixed base 10 to make the casing 20 and the fixed base 10 relatively rotatable.

In an embodiment of the present invention, the first photoelectric device 30 includes a first camera 31 and a glass cover 32, the glass cover 32 is disposed at the lower end of the casing 20, and the first camera 31 is disposed inside the glass cover 32. The first camera 31 is provided as a wide-angle camera, a telephoto camera or a camera with other special functions according to actual applications.

The second photoelectric device 40 is rotatably arranged at a first position 23 on the outside of the casing 20, such as the left side shown in FIG. 1, and the third photoelectric device 50 is rotatably arranged at a second position 24, such as the right side shown in FIG. 1.

The accommodating space 21 of the casing 20 is provided with a transmission mechanism 60 for driving the casing 20 to rotate horizontally relative to the fixed base 10, and driving the first photoelectric device 30, the second photoelectric device 40, and the third photoelectric device 50 to rotate simultaneously in the vertical direction (that is, in the direction of pitch and elevation angles) at the same time. The transmission mechanism 60 includes a base 80, a first angle rotation mechanism 61, and a second angle rotation mechanism 63; wherein, the base 80 is fixedly arranged in the accommodating space 21 of the casing 20, and the first angle rotation mechanism 61 is arranged on the base 80 and connected to the fixed base 10 to drive the casing 20 rotate back-and-forth relatively to the fixed base 10 in a first direction 70. The second angle rotation mechanism 63 is arranged on the base 80 and connected to the first photoelectric device 30, the second photoelectric device 40, and the third photoelectric device 50, to drive the first photoelectric device 30, the second photoelectric device 40, and the third photoelectric device 50 to rotate back-and-forth synchronously in a second direction 71. Wherein, the first direction 70 and the second direction 71 are respectively the horizontal direction and the vertical direction, which are orthogonal to each other.

The transmission mechanism 60 further includes a transmission shaft 81 that is pivotally arranged on the base 80 with the axis horizontally, and the two ends of the transmission shaft 81 are extended through the holes provided on both sides of the casing 20 to the outside the casing 20. The second photoelectric device 40 and the third photoelectric device 50 are respectively provided with a second shaft 401 and a third shaft 501 extending laterally, and at the ends of the second shaft 401 and the third shaft 501 are respectively coupled to a second shaft coupling 402 and a third shaft coupling 502. The second shaft 401 is connected and fixed to one end of the drive shaft 81 extending outside the casing 20 through the second shaft coupling 402, and the third shaft 501 is connected and fixed to the other end of the transmission shaft 81 extending out of the casing 20 through the third shaft coupling 502.

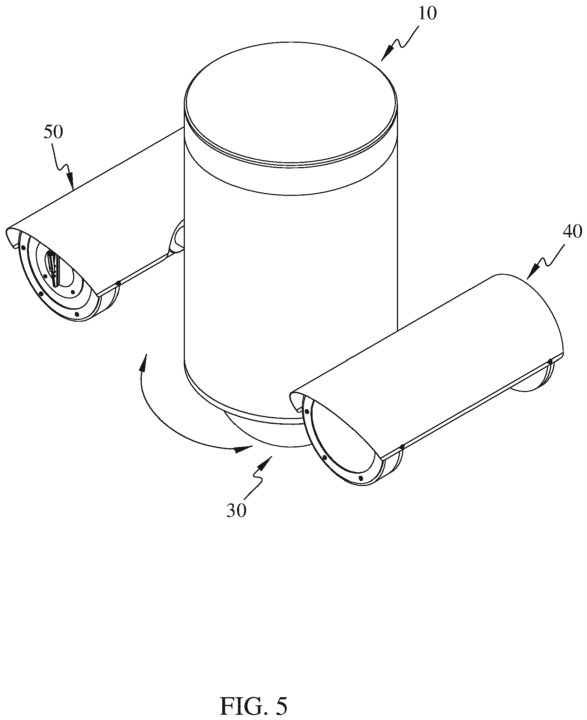

The first angular rotation mechanism 61 is arranged on one side of the base 80, including: a first motor 611 and a first gear mechanism 62, and the first motor 611 is connected to the fixed base 10 through the first gear mechanism 62. Specifically, the first motor 611 is arranged on a side above the base 80. The first gear mechanism 62 includes: a first driving gear set 621, a first idle gear 622, a first driven gear 624, and a first worm 623, wherein, the first driving gear set 621 is a stage gear formed by a large gear and a small gear, and is connected to the drive shaft of the first motor 611. The first idler gear 622 is connected to the first worm 623 disposed at the base 80, and the first idler gear 622 meshes with the small gear of the first driving gear set 621, and the first worm 623 meshes with the first worm wheel 101 located at the lower end of the fixed base 10. The first driven gear 624 is connected to a rotating shaft of a first encoder 90 located at the base 80, and the first driven gear 624 meshes with the large gear of the first driving gear set 621. As such, when the first motor 611 runs, the first driving gear set 621 will simultaneously drive the first idler gear 622 and the first driven gear 624 to rotate, and the first idler gear 622 will drive the first worm wheel 101 through the first worm 623, so that the base 80 and the entire casing 20 rotate in the first direction (i.e., the horizontal direction) relatively to the fixed base 10. That is, the first photoelectric device 30, the second photoelectric device 40, and the third photoelectric device 50 can be simultaneously driven to rotate in the horizontal direction, as shown in FIG. 5, while the first driven gear 624 drives the first encoder 90 to run at the same time. The mechanical displacement of the rotation of the first encoder 90 is converted into an electrical signal, and then processed by software to detect the position and speed of the casing 20 rotating in the first direction.

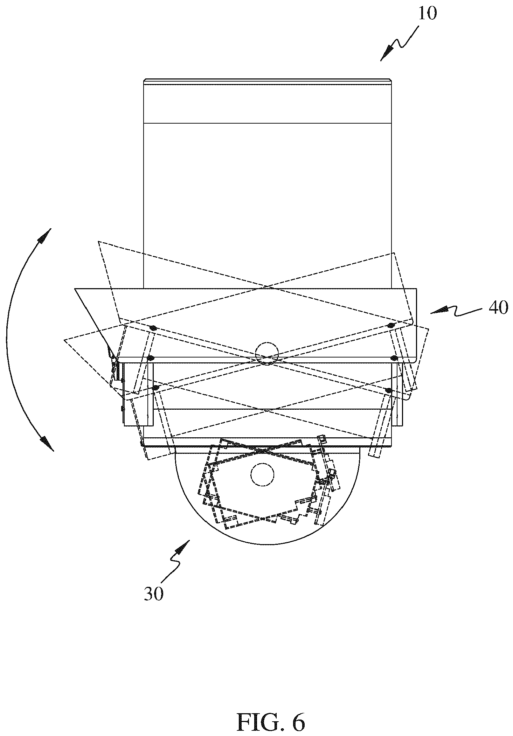

The second angular rotation mechanism 63 is arranged on the other side of the base 80, including: a second motor 631 and a second gear mechanism 64, and the second motor 631 synchronously drives the first photoelectric device 30, the second photoelectric device 40, and the third photoelectric device 50 to rotate in the second direction. Specifically, the second motor 631 is disposed above the base 80 on the other side, and the second motor 631 and the first motor 611 are arranged parallel to each other. The second gear mechanism 64 comprises: a second drive gear set 641, a second idler gear 642, a second driven gear 644, a second worm s 643, and a belt drive set. Wherein, the second drive gear set 641 is stage gear comprising a large gear and a small gear, and is connected to the driving shaft of the second motor 631. The second idler gear 642 is connected to the second worm 643 provided on the base 80, and the second idler gear 642 meshes with the small gear of the second driving gear set 641, and the second worm 643 meshes with the second worm wheel 82 on the drive shaft 81. The second driven gear 644 is connected to a rotating shaft of a second encoder 91 on the base 80, and the second driven gear 644 is engaged with the large gear of the second driving gear set 641. The belt drive set includes a driving pulley 645, a driven pulley 647, and a belt 646; wherein the driving pulley 645 is fixedly arranged on the transmission shaft 81, and the driven pulley 647 is connected to the first camera 31 of the first photoelectric device 30 through the first shaft 648, and the belt 646 is connected between the driving pulley 645 and the driven pulley 647. Preferably, the driving pulley 645 and the driven pulley 647 are timing pulleys, and the belt 646 is a timing belt. Accordingly, when the second motor 631 runs, the second driving gear set 641 will simultaneously drive the second idler gear 642 and the second driven gear 644 to rotate, and the second idler gear 642 will then drive the second worm wheel 82 via the second worm 643 to make the transmission shaft 81 rotate in the second direction (that is, the vertical direction or the direction of pitch and elevation), and the transmission shaft 81 drives the driving pulley 645 to rotate at the same time, and drives the driven pulley 647 to rotate via the belt 646, and the driven pulley 647 drives the first camera 31 of the first photoelectric device 30 to rotate in the second direction via the first shaft 648, and the first camera 31 then takes pictures of the outside through the glass cover 32. The second motor 631 can simultaneously drive the first photoelectric device 30, the second photoelectric device 40, and the third photoelectric device 50 to rotate in the vertical direction via the second angular rotation mechanism 63, as shown in FIG. 6, and the second driven gear 644 can drive the second encoder 91 to run at the same time. The mechanical displacement of the rotation of the second encoder 91 is converted into an electrical signal, and then the signal is processed by software to detect the position and speed of rotation of the first photoelectric device 30, the second photoelectric device 40 and the third photoelectric device 50 in the vertical direction.

In a preferred embodiment of the present invention, the first photoelectric device 30, the second photoelectric device 40, and the third photoelectric device 50 can be cameras, thermal imagers, and/or laser lamps respectively, however, the first photoelectric device 30, the second photoelectric device 40, and the third photoelectric device 50 are not limited to the present embodiment, and can be configured as other suitable devices according to applications.

In summary, the present invention integrates the first angle rotation mechanism 61 and the second angle rotation mechanism 63 included in the transmission mechanism 60 into the base 80 and accommodates the entirety in the casing 20. In addition to reducing the overall size, the simplified structure makes the overall appearance simple and compact. The present invention can also control the rotation of three photoelectric devices in the horizontal and vertical directions at the same time to obtain better and more efficient monitoring functions.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A monitor device, comprising:
a fixed base, for fixing to a structure;
a casing, with an accommodating space, an upper end of a longitudinal axis of the casing being rotatably connected to a lower end of the fixed base, a lower end of the longitudinal axis of the casing being provided with a first photoelectric device;
a base, fixedly arranged in the accommodating space of the casing;
a transmission shaft, pivotably with axis being horizontally configured on the base;
a second photoelectric device, fixedly arranged at one end of the transmission shaft, so that the second photoelectric device being rotatably located at a first position outside the casing;
a third photoelectric device, fixedly arranged on the other end of the transmission shaft, so that the third photoelectric device being rotatably located at a second position outside the casing;
a transmission mechanism, arranged in the accommodating space of the casing, and the transmission mechanism further comprising:
a first angle rotation mechanism, disposed on one side of the base, the first angle rotation mechanism having a first motor, and the first motor being connected to the fixed base through a first gear mechanism to drive the casing rotatable back-and-forth in a first direction relative to the fixed base; and
a second angular rotation mechanism, disposed on the base, the second angular rotation mechanism having a second motor, and the second motor being connected to the transmission shaft through a second gear mechanism, and connected to the first photoelectric device through the transmission shaft, so that the first photoelectric device being driven by the second motor, and the second photoelectric device and the third photoelectric device synchronously rotating back-and-forth in a second direction;
wherein the first motor and the second motor are disposed parallel to each other above the base, and
wherein the first direction and the second direction is orthogonal to each other.

2. The monitor device according to claim 1, wherein the first direction is a horizontal direction, and the second direction is a vertical direction.

3. The monitor device according to claim 2, wherein the first photoelectric device includes a first camera and a glass cover, the glass cover is arranged at the lower end of the casing, and the first camera is arranged inside the glass cover.

4. The monitor device according to claim 3, wherein:
the first gear mechanism comprises:
a first driving gear set, connected to a drive shaft of the first motor;
a first idler gear, connected to a first worm provided on the base, and the first idler gear meshing with the first driving gear set;
a first driven gear, connected to a first encoder provided on the base, and the first driven gear meshing with the first driving gear set; and a first worm wheel, located on the fixed base and engaged with the first worm;
the second gear mechanism comprises:
a second driving gear set, connected to a drive shaft of the second motor;
a second idler gear, connected to a second worm located on the base, and the second idler gear meshing with the second driving gear set;
a second driven gear, connected to a second encoder provided on the base, and the second driven gear meshing with the second driving gear set; and
a second worm wheel, fixedly located on the drive shaft and engaged with the second worm.

5. The monitor device according to claim 4, wherein the second angle rotation mechanism further comprises a driving pulley, a belt, and a driven pulley, wherein the driving pulley is fixedly arranged on the drive shaft, the driven pulley is connected to the first camera, the belt connects the driving pulley and the driven pulley, so that the transmission shaft drives the second photoelectric device and the three photoelectric devices to rotate in the second direction, and at the same time drives the first camera to rotate in the second direction through the driving pulley, the belt, and the driven pulley.
